(19) Europäisches Patentamt
European Patent Office
Office européen des brevets

(11) **EP 3 286 872 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(21) Anmeldenummer: **16727158.4**

(22) Anmeldetag: **31.05.2016**

(51) Int Cl.:
*G06F 21/51* (2013.01)     *G06F 21/57* (2013.01)
*H04L 9/08* (2006.01)     *H04L 29/06* (2006.01)

(86) Internationale Anmeldenummer:
**PCT/EP2016/062243**

(87) Internationale Veröffentlichungsnummer:
**WO 2017/005410 (12.01.2017 Gazette 2017/02)**

(54) **BEREITSTELLEN EINES GERÄTESPEZIFISCHEN KRYPTOGRAPHISCHEN SCHLÜSSELS AUS EINEM SYSTEMÜBERGREIFENDEN SCHLÜSSEL FÜR EIN GERÄT**

PROVISION OF A DEVICE-SPECIFIC CRYPTOGRAPHIC KEY FROM A SYSTEM-WIDE KEY FOR A DEVICE

OBTENTION D'UNE CLÉ CRYPTOGRAPHIQUE SPÉCIFIQUE D'UN APPAREIL À PARTIR D'UNE CLÉ INTERSYSTÈME POUR UN APPAREIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2015 DE 102015212657**

(43) Veröffentlichungstag der Anmeldung:
**28.02.2018 Patentblatt 2018/09**

(73) Patentinhaber: **Siemens Mobility GmbH
81739 München (DE)**

(72) Erfinder:
• **ASCHAUER, Hans
81829 München (DE)**
• **FALK, Rainer
85586 Poing (DE)**
• **MERLI, Dominik
86690 Mertingen (DE)**

(56) Entgegenhaltungen:
DE-A1-102009 013 332     US-A1- 2013 142 329
US-A1- 2015 180 654

EP 3 286 872 B1

**Beschreibung**

Die Erfindung betrifft ein Verfahren sowie eine Vorrichtung zum gesicherten Bereitstellen eines gerätespezifischen kryptographischen Schlüssels aus einem systemübergreifenden Schlüssel für ein Gerät sowie ein Computerprogrammprodukt mit einem Computerprogramm, das Mittel zur Durchführung des genannten Verfahrens aufweist. Dafür wird mindestens eine gerätespezifische Systemidentifizierungsinformation während einer Ausführung eines Bootcodes gebildet und versiegelt.

Computersysteme, wie insbesondere eingebettete Systeme oder sogenannte Embedded Systems, verwenden kryptographische Schlüssel für unterschiedliche Anwendungszwecke, wie beispielsweise Geräteauthentisierung, sichere Kommunikation, Integritätsprüfung, Lizenzprüfung oder Know-How-Schutz. Dazu ist es erforderlich, dass ein kryptographischer Schlüssel sicher bereitgestellt wird.

Es existieren verschiedene softwarebasierte Lösungen oder Lösungen für Hardware-Plattformen, wie beispielsweise das Speichern in einem Konfigurationsspeichermodul, Whitebox-Kryptographie-Methoden, Trusted Platform Module Chips für PCs, speziell geschützte Cryptocontroller oder Secure Memories. Um Fertigungsprozesse zu vereinfachen, werden dabei in der Praxis identische Schlüssel auf mehreren Geräten verwendet. Diese können beispielsweise in einem Firmware-Image einer zentralen Prozessoreinheit, kurz CPU, oder in einem Bitstream einer programmierbaren Hardware-Einrichtung oder eines FPGAs enthalten sein oder in einem Speicherbaustein hinterlegt sein.

Es ist allgemein bekannt, Schlüsselableitungsfunktionen wie beispielsweise HMAC, SHA256 oder HKDF, AES, etc. zu verwenden, um aus einem kryptographischen Schlüssel abhängig von einem Ableitungsparameter einen abgeleiteten Schlüssel zu berechnen. Dabei ist es oftmals schwierig, einen vorhandenen Masterkey gesichert zu hinterlegen.

Es ist bekannt, die Sicherheit eines Masterkeys oder eines abgeleiteten kryptographischen Schlüssels durch eine Hardwareverankerung zu gewährleisten. Oftmals kann allerdings eine Hardwareverankerung nicht realisiert werden oder ist aufwändig und teuer.

Die Druckschrift US 2015/180654 A1 beschreibt ein Verfahren zum gesicherten Bereitstellen eines Schlüssels mit einer Anforderungseinheit und einer Bereitstellungseinheit. Dabei wird ein Schlüssel aus Parametern abgeleitet, von denen mindestens einer durch die Anforderungseinheit unvorgebbar für die Schlüsselableitung verwendet wird. Der unvorgebbare Parameter kann an eine Hardware-Plattform gebunden sein. Ferner kann der Schlüssel lediglich einmal während jedes Bootvorgangs erzeugt werden, indem einem Parameter das Setzen lediglich einmal während des Bootvorgangs ermöglicht wird.

Vor diesem Hintergrund besteht die Aufgabe der vorliegenden Erfindung darin, ein Verfahren, ein Computerprogrammprodukt sowie eine Vorrichtung bereitzustellen, welche auf einem von mehreren unterschiedlichen Geräten einen geräteindividuellen kryptographischen Schlüssel gesichert aus einem systemübergreifenden Schlüssel abgeleitet bereitstellen können.

Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren gemäß Anspruch 1 insbesondere zum gesicherten Bereitstellen eines gerätespezifischen kryptographischen Schlüssels aus einem systemübergreifenden Schlüssel für ein Gerät, mit den folgenden Schritten:

- Bilden mehrerer gerätespezifischer Systemidentifizierungsinformationen während einer Startphase, wobei die gerätespezifische Systemidentifizierungsinformationen mehrere Teile umfassen, welche schrittweise ermittelt und gesetzt werden;
- Versiegeln der gerätespezifischen Systemidentifizierungsinformationen durch ein jeweils maximal einmal mögliches Schreiben der jeweiligen gerätespezifischen Systemidentifizierungsinformation während der Startphase oder einer nachfolgenden weiteren Startphase;
- Ermitteln des systemübergreifenden Schlüssels;
- Ableiten des gerätespezifischen kryptographischen Schlüssels aus dem systemübergreifenden Schlüssel unter Verwendung der gerätespezifischen Systemidentifizierungsinformationen;

wobei mindestens zwei gerätespezifische Systemidentifizierungsinformationen während der Startphase oder der weiteren Startphase gebildet und versiegelt werden, wobei in mehreren Startphasen jeweils eine Systemidentifizierungsinformation versiegelt wird, und eine endgültige gesamt-gerätespezifische Systemidentifizierungsinformation aus den Systemidentifizierungsinformationen als Parameter gebildet wird

Unter einem systemübergreifenden Schlüssel wird in der vorliegenden Anmeldung ein Systemschlüssel oder Masterschlüssel verstanden, welcher insbesondere für Geräteexemplare identischer Firmware identisch ist.

Unter einem Gerät wird im Folgenden beispielsweise ein System on Chip oder ein eingebettetes System verstanden, aufweisend beispielsweise eine programmierbare Hardwarelogik und einen Prozessor. Für dieses Gerät soll ein gerätespezifischer kryptographischer Schlüssel erzeugt werden, wobei eine beliebige Charakteristik des Geräts in den gerätespezifischen kryptographischen Schlüssel einfließen kann. Dabei kann es sich um Hardwaremerkmale ebenso handeln wie um Spezifika der Funktionsweise oder der Vernetzung oder einer Aufgabe oder Rolle innerhalb eines Systems.

Unter der gerätespezifischen Systemidentifizierungsinformation sind insbesondere Bits oder Bitfolgen zu verstehen, welche während der Ausführung eines Bootcodes beispielsweise zum Starten oder Booten eines Computersystems mit Bootloader ermittelbar sind. Unter der Startphase wird insbesondere die Phase des Bootens verstanden. Das Booten erfolgt über mindestens eine Bootphase oder sogenannte Boot-Stage. In dieser kann ein temporäres Root File System geladen und ausgeführt wird.

Die gerätespezifische Systemidentifizierungsinformation wird so gesetzt oder geschrieben, dass sie im laufenden nachfolgenden Betrieb nicht mehr änderbar ist. Dieses Setzen oder Schreiben kann auch als Versiegeln bezeichnet werden. Dabei ist ein Schreiben maximal einmal während einer Bootphase möglich. Man kann auch sagen, es ist nur ein Schreibzugriff möglich. Im nachfolgenden, laufenden Betrieb ist der versiegelte Wert nicht mehr veränderbar und kann nicht mehr neu geschrieben werden. Erst bei einem folgenden Systemstart könnte er erneut geschrieben werden. Dies hat den Vorteil, dass die gerätespezifische Systemidentifizierungsinformation nur während eines Systemstarts gesetzt werden kann. Vorzugsweise wird sie bei jedem Systemstart gesetzt. Das Zeitfenster für den Angriff ist dadurch gering, da im laufenden Betrieb des Gerätes keine Änderung möglich ist. Eine Manipulation einer Systemstartroutine ist häufig nur schwierig durch einen Angreifer durchführbar, da dort fester, nicht nachladbarer oder nur speziell geschützt aktualisierbarer Startcode ausgeführt wird. Außerdem besteht während der Startphase häufig noch keine aktive Netzwerkverbindung, sodass auch keine Angriffe über ein Datenkommunikationsnetzwerk möglich sind.

In einer Variante wird bei einem Neustart des Gerätes geprüft, auf welche Art der Neustart herbeigeführt wurde. So kann z.B. ein Power-On-Reset, ein Hardware Reset, ein Software Restart unterschieden werden. Ein Neu-Setzen der gerätespezifischen Systemidentifizierungsinformation kann dabei beispielsweise nur dann freigeschaltet werden, wenn ein Power-On Reset oder ein Hardware-Reset über einen lokalen Taster erfolgt. Bei einem Software Reset bzw. Neustart dagegen kann der zuvor gesetzt Wert gesetzt bleiben und auch durch den Startcode nicht verändert werden.

Weiterhin ist es möglich, dass die Schreibmöglichkeit der gerätespezifischen Systemidentifizierungsinformation automatisch auch ohne erfolgten Schreibvorgang bei Vorliegen eines Sperrkriteriums gesperrt wird. Mögliche Sperrkriterien sind ein Time-Out, die Konfiguration einer Speicherverwaltungseinheit (Memory Management Unit, MMU), der Zugriff auf ein externes Speichermedium (z.B. SD-Card) oder das Aktivieren einer Netzwerkschnittstelle. Dabei kann kein gerätespezifischer kryptographischen Schlüssel aus dem systemübergreifenden Schlüssel gebildet und bereitgestellt werden. Alternativ kann ein fester Ersatzwert oder Defaultwert als Systemidentifizierungsinformation automatisch gesetzt werden.

Der systemübergreifende Schlüssel kann beispielsweise ermittelt werden, indem er aus einem internen Speicher oder einem durch eine physikalisch unklonbare Funktion realisierten Speicher ausgelesen wird. Der gerätespezifische kryptographische Schlüssel wird schließlich aus dem systemübergreifenden Schlüssel unter Verwendung der mindestens einen Systemidentifizierungsinformation abgeleitet.

Die gerätespezifische Systemidentifizierungsinformation wird beispielsweise als Schlüsselableitungsparameter für eine Schlüsselableitungsfunktion verwendet. In nachfolgenden Ausführungsphasen kann keine andere Information, die die gerätespezifische Systemidentifizierungsinformation ersetzen könnte, gesetzt werden.

Durch das beschriebene Verfahren werden Manipulationen verhindert, bei welchen ein Schlüssel auf einem vorliegenden Gerät für ein anderes Gerät gebildet wird. Da auf dem vorliegenden die gerätespezifische Systemidentifizierungsinformation in die Schlüsselableitung eingeht, ist der abgeleitete Schlüssel nur auf die vorliegende Hardware individualisiert. Beispielsweise kann eine Entschlüsselung von Daten auf einem System on Chip nur mit dem für das jeweilige Gerät spezifischen Schlüssel gebildet werden. Ein auf dem Gerät für ein anderes Gerät abgeleiteter Schlüssel ist somit wertlos.

Gemäß einer Ausgestaltung wird das Bilden der gerätespezifischen Systemidentifizierungsinformation unter Verwendung eines für das Gerät charakteristischen Parameters, wie insbesondere einer Seriennummer oder eines Typs eines Speicherbausteines oder eines Peripheriebausteines des Gerätes, oder unter Verwendung eines Identifizierers eines Prozessors oder eines Chips des Gerätes oder unter Verwendung einer MAC-Adresse eines Netzwerkadapters oder einer Seriennummer einer Harddisc des Gerätes, oder unter Verwendung einer physikalisch unklonbaren Funktion oder einer Versionsinformation oder eines Hash-Wertes von Firmware oder von Konfigurationsdaten durchgeführt.

Als Speicherbausteine sind insbesondere Flashspeicher, EEPROM-Speicher, SD-Speicherkarten oder USB-Sticks denkbar. Als Peripheriebausteine dienen vorteilhafterweise Sensoren und Aktoren. Unter einem Chip wird insbesondere ein integrierter Schaltkreis verstanden, beispielsweise der der Realisierung des FPGAs dienende integrierte Schaltkreis.

Gemäß einer Ausgestaltung werden zum Bilden der gerätespezifischen Systemidentifizierungsinformation ein Initialisierungscode oder ein Programmcode eines Wurzel-Dateisystems verwendet.

In einem initialen, temporären RAM-Filesystem, beispielsweise unter LINUX einem Init RD oder Init RAMFS, kurz für Initial Ram Root File System, kann ein Programmcode enthalten sein, um eine geräteindividuelle Systemidentifizierungsinformation zu bilden. Alternativ kann die geräteindividuelle Systemidentifizierungsinformation oder ein Teil davon schon während einer früheren Startphase oder Bootphase gebildet und gesetzt werden, beispielsweise durch einen Second Stage Boot Loader, z.B. U-Boot, oder einen First Stage Boot Loader, beispielsweise ein Bootcode einer Soft-CPU, der als Teil eines FPGA-Bitstreams geladen wird.

Gemäß einer Ausgestaltung wird das Versiegeln durchgeführt mittels eines einmal beschreibbaren, flüchtigen Speichers, beispielsweise eines Registers, welches einen weiteren Schreibzugriff verhindert, oder mittels einer Konfiguration, bei der ein Speicher nach dem Versiegeln als nicht beschreibbar konfiguriert wird.

Beispielsweise kann auf einem System on Chip mit rekonfigurierbarer Hardware ein Register vorgesehen sein, das nur einen einzelnen Schreibzugriffsvorgang ermöglicht. Alternativ kann ein Flag oder eine Memory Management Unit so konfiguriert werden, dass ein weiterer Schreibzugriff unterbunden wird. Ein Random Access Memory, kurz RAM, wird beispielsweise als nicht beschreibbar konfiguriert. Ferner kann die gerätespezifische Systemidentifizierungsinformation in ein Register eines Prozessors, beispielsweise einer Hauptprozessoreinheit, kurz CPU, geschrieben werden. Das Register kann, wie auch bei einer FPGA-basierten Variante, als nicht änderbar definiert sein. Dies wird beispielsweise über ein Write Once Memory oder Sperren eines Speicherzugriffs realisiert. Ferner kann die gerätespezifische Systemidentifizierungsinformation in den Cache eines Prozessors einer CPU geschrieben werden und dort als gesperrt konfiguriert werden, beispielsweise mittels eines Cache Lock-Verfahrens.

Gemäß einer Ausgestaltung wird als systemübergreifender Schlüssel ein Security Key oder Master Key ausgelesen, insbesondere aus einem Speicherbaustein oder einem Firmware Image einer Prozessoreinheit oder aus einem Bitstream eines programmierbaren Hardwaremoduls.

Gemäß einer Ausgestaltung wird für das Ableiten eine Schlüsselableitungsfunktion in Abhängigkeit von der gerätespezifischen Systemidentifizierungsinformation modifiziert oder es geht für eine feste Schlüsselableitungsfunktion die gerätespezifische Systemidentifizierungsinformation als Ableitungsparameter ein.

Beispielsweise wird eine Boot Time Key Derivation Function verwendet, in welche die gerätespezifische Systemidentifizierungsinformation als Schlüsselableitungsparameter eingeht. Der aus dem systemübergreifenden Schlüssel abgeleitete gerätespezifische Schlüssel wird beispielsweise in ein Schlüsselregister auf einem FPGA, einem CPU-Register oder einem Cache-Eintrag geschrieben. Alternativ oder zusätzlich wird ein Softwarecode zur Schlüsselableitung abhängig von der gerätespezifischen Systemidentifizierungsinformation so modifiziert, dass der Softwarecode abhängig von der gerätespezifischen Systemidentifizierungsinformation eine Schlüsselableitung berechnet. Beispielsweise kann eine durch Whitebox-Cryptography obfuszierte Implementierung einer Schlüsselableitungsfunktion, beispielsweise darin enthaltene Look up-Tabellen, abhängig von der gerätespezifischen Systemidentifizierungsinformation modifiziert bzw. gesetzt werden. Somit wird der Schlüsselableitungsalgorithmus anstatt eines eingehenden Parameters individualisiert.

Gemäß einer Weiterbildung führt die Schlüsselableitungsfunktion das Ableiten zur Laufzeit durch. Im regulären Betrieb, d.h. zur Laufzeit oder sogenannten Runtime des Systems können durch eine Runtime Key Derivation Function abgeleitete Schlüssel berechnet werden, wobei auf unterschiedlichen Systemen sich unterschiedliche Schlüssel ergeben. Dabei wird zur Laufzeit der Runtime Key Derivation Function RTKDF ein Ableitungsparameter DP vorgegeben, um einen abgeleiteten Laufzeitschlüssel DRK aus dem systemübergreifenden Schlüssel zu bestimmen. Beispielsweise verwendet die Implementierung der Runtime Key Derivation Function die in einem Register abgelegte gerätespezifische Schlüsselidentifizierungsinformation als Ableitungsparameter oder gibt einen weiteren Wert als Ableitungsparameter vor.

Die Runtime Key Derivation Function kann beispielsweise in einem FPGA eines Systems on Chip realisiert werden.

Ferner ist es möglich, dass die Implementierung der Runtime Key Derivation Function den abhängig von der gerätespezifischen Systemidentifizierungsinformation abgeleiteten Geräteschlüssel als Inputschlüssel verwendet.

Gemäß der Erfindung wird mindestens eine weitere gerätespezifische Systemidentifizierungsinformation während der Startphase oder der weiteren Startphase versiegelt. Hierbei wird während zwei oder mehr aufeinanderfolgenden Startphasen oder Phasen des gesamten Start- oder Bootvorganges jeweils eine gerätespezifische Systemidentifizierungsinformation erstellt. Insbesondere wird die gerätespezifische Systemidentifizierungsinformation, d.h. die endgültige gesamt-gerätespezifische Systemidentifizierungsinformation, aus mehreren Identifizierungsinformationen als Parameter gebildet. So können Hardwaremanipulationen erschwert werden, da ein Austauschen einer Komponente des Systems, beispielsweise eines Flash-Speichers oder eines EEPROMs dazu führt, dass eine unterschiedliche gerätespezifische Systemidentifizierungsinformation gebildet wird. Dies hat zur Folge, dass unterschiedliche Schlüssel zur Laufzeit abgeleitet werden. Somit können Entschlüsselungen von Daten des Originalsystems in einem manipulierten System nicht erfolgen. Beispielsweise kann die gesamt-gerätespezifische Systemidentifizierungsinformation als Konkatenation der Einzelparameter gebildet werden. Vorzugsweise wird die gerätespezifische Systemidentifizierungsinformation als ein kryptographischer Hashwert der konkatenierten Parameter gebildet. Alternativ kann eine Kette von Hashwerten der Parameter gebildet werden.

Gemäß der Erfindung wird in mehreren Phasen des Bootprozesses jeweils eine Information geschrieben, die in jeweils späteren oder jeweils darauffolgenden Bootphasen nicht mehr änderbar ist. Diese in mehreren Bootphasen geschriebenen Informationen bilden gemeinsam die gerätespezifische Systemidentifizierungsinformation.

Die Erfindung betrifft ferner ein Computerprogrammprodukt mit einem Computerprogramm, das Mittel zur Durchführung des Verfahrens nach einem der oben beschriebenen Ausführungen aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie zum Beispiel ein Mikroprozessor für eine Smartcard oder dergleichen in Frage. Das Verfahren oder die Vorrichtung kann auch festverdrahtet oder in konfigurierbaren FPGAs implementiert werden.

Die Erfindung betrifft ferner eine Vorrichtung gemäß Anspruch 9 insbesondere zum gesicherten Bereitstellen eines gerätespezifischen kryptographischen Schlüssels aus einem systemübergreifenden Schlüssel für ein Gerät, aufweisend:

- eine erste Einheit zum Bilden mehrerer gerätespezifischer Systemidentifizierungsinformationen während einer Startphase;
- eine zweite Einheit zum Versiegeln der gerätespezifischen Systemidentifizierungsinformationen, wobei die gerätespezifische Systemidentifizierungsinformationen während der Startphase oder einer nachfolgenden weiteren Startphase jeweils maximal einmal schreibbar sind, wobei mindestens zwei gerätespezifische Systemidentifizierungsinformationen während der Startphase oder der weiteren Startphase gebildet und versiegelt werden, wobei in mehreren Startphasen jeweils eine Systemidentifizierungsinformation versiegelt wird;
- eine dritte Einheit zum Ermitteln des systemübergreifenden Schlüssels;
- eine vierte Einheit zum Ableiten des gerätespezifischen kryptographischen Schlüssels aus dem systemübergreifenden Schlüssel unter Verwendung der gerätespezifischen Systemidentifizierungsinformationen, wobei eine endgültige gesamt-gerätespezifische Systemidentifizierungsinformation aus den Systemidentifizierungsinformationen als Parameter gebildet wird

Die jeweiligen Einheiten können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Erfindung wird nachfolgend anhand von Ausführungsbeispielen mithilfe der Figuren näher erläutert. In den Figuren sind funktionsgleiche Elemente mit denselben Bezugszeichen versehen, sofern nichts anderes angegeben ist. Es zeigen:

Figur 1     eine schematische Darstellung eines Systems on Chip zur Generierung eines gerätespezifischen kryptographischen Schlüssels während einer Bootphase;

Figur 2     eine schematische Darstellung eines Systems on Chip zur Verwendung eines gerätespezifischen kryptographischen Schlüssels während eines Betriebs;

Figur 3     eine schematische Darstellung eines Systems on Chip zur Ableitung eines gerätespezifischen kryptographischen Schlüssels in einer Bootphase gemäß einer weiteren Ausführungsform der Erfindung;

Figur 4     eine schematische Darstellung eines Systems on Chip zur Verwendung eines gerätespezifischen kryptographischen Schlüssels gemäß einem weiteren Ausführungsbeispiel der Erfindung;

Figur 5     eine schematische Darstellung eines Systems on Chip zur Generierung eines gerätespezifischen kryptographischen Schlüssels mit mehreren beim Bootvorgang gesetzten Parametern zur Bildung der gerätespezifischen Systemidentifizierungsinformation.

Die Ausführungsbeispiele werden anhand eines FPGA-basierten Systems on Chip SoC erläutert. Dabei kann es sich um einen programmierbare Hardwarelogik FPGA mit einer Soft-Core-Processor-Unit CPU handeln, beispielsweise ein NIOS 2 auf Altera Cyclone IV oder Cyclone V oder ein Microblaze auf Xilinx Kintex-7, Virtex-7 oder Artix-7, oder um ein FPGAbasiertes System on Chip mit Hard-CPU wie einem ARM Core, beispielsweise Xilinx Zynq oder Altera Cyclone V SoC.

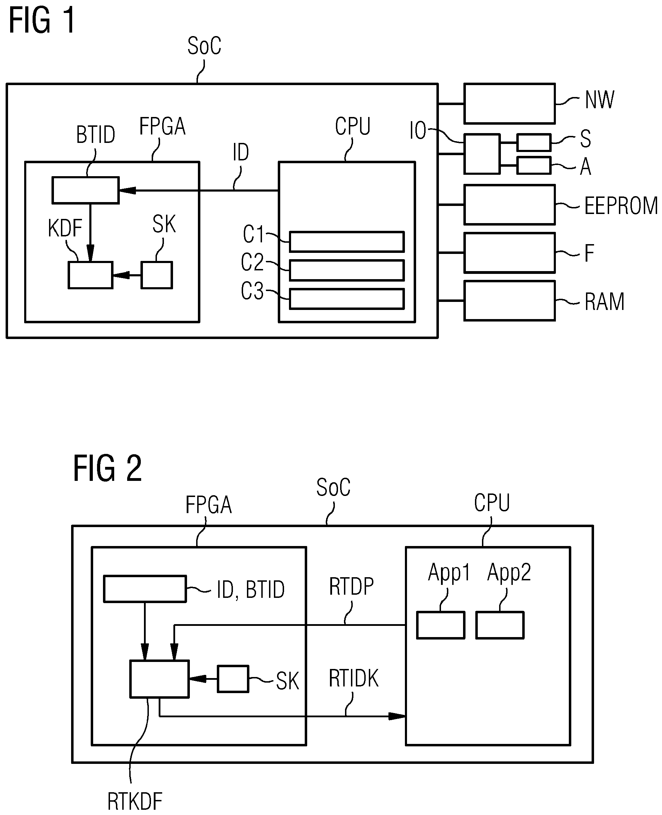

Figur 1 zeigt den schematischen Aufbau eines Systems on Chip SoC mit für die Ausführungsbeispiele ausgewählten Komponenten. Auf einem Prozessor CPU, beispielsweise einer Soft-CPU oder einer Hard-CPU wird ein eingebettetes System mit einem auf einem Linux-Kernel basierenden Betriebssystem, also ein sogenanntes embedded LINUX, gestartet. Auf dem System on Chip SoC ist als asymmetrisches kryptographisches Verfahren in RSA-Verfahren vorgesehen. Während des Boot-Vorgangs wird nach initialen Bootphasen ein Second Stage Boot Loader, beispielsweise U-Boot, gestartet. Dieser enthält einen öffentlichen RSA-Schlüssel, um die mittels des zugehörigen privaten Schlüssels erstellte digitale Signatur des Kernels und des initialen RAM-basierten Root-File-Systems zu verifizieren. Ein geladenes Image wird nur dann akzeptiert, wenn es eine korrekte RSA-Signatur aufweist.

Ist dies der Fall, so wird der Kernel geladen und das initiale RAM-basierte Root-File-System (Init RD) C2 wird geladen. Es wird gewährleistet, dass es sich um einen authentischen Kernel und ein authentisches File-System handelt, d.h. eines, das nicht manipuliert ist. Nachdem der Second Stage Boot Loader den Betriebssystem-Kernel und das initiale RAM-File-System C2 geladen hat, wird der Kernel C3 gestartet. Er führt den Programmcode (Init Code) C1 aus, der im initialen File-System C2 enthalten ist.

Während dieses Bootens ermittelt der Programmcode C1 eine eindeutige gerätespezifische Systemidentifizierungsinformation ID und schreibt sie in das Register Boot Time System BTID. Dieses Register ist ein volatiles Register, d.h. bei einem Hardware Reset oder einer Stromunterbrechung geht der Inhalt des volatilen Registers verloren. Es wird jedoch durch logische Schutzmaßnahmen sichergestellt, dass dieses Register nach einem Hardware Reset jeweils nur einmal beschreibbar ist. Dies wird entweder durch eine interne Logik erreicht, dass ein Beschreiben nur einmalig möglich ist, oder über ein Setzen eines Write Only Flags. So kann der Wert des Registers zur Laufzeit nicht geändert werden.

Der Programmcode oder Bootcode C1 erfasst zur Bildung der Systemidentifizierungsinformation ID folgende Parameter oder eine Teilmenge der folgenden Parameter:

- Hersteller, Modell und Seriennummer eines elektrisch löschbaren programmierbaren Nur-Lese-Speichers EEPROM,
- Herstellercode, Modell und Seriennummer eines oder mehrerer Flash-Speicherbausteine F,
- Hersteller, Modell und Seriennummer eines oder mehrerer Direktzugriffsspeicher-Bausteine RAM,
- Hersteller, Modell und Seriennummer von über Input/-Output-Schnittstellen IO verbundenen Sensoren S oder Aktoren A,
- Seriennummer und Netzwerkadresse eines Netzwerkadapters NW,
- Hersteller, Modell und Seriennummer des System on Chips SoC.

Diese Geräte-individuellen Parameter werden erfasst, beispielsweise über Kernel-Module oder das Verzeichnis der Schnittstellen zur Ansteuerung der Hardware, d.h. das /dev-Dateisystem. Vorteilhaft werden Parameter kryptographisch geschützt ermittelt, beispielsweise wenn das EEPROM ein Secret EEPROM-Baustein ist, der eine Challenge-Response-Authentisierung unterstützt.

Je mehr der genannten Parameter eingehen, desto komplexer wird einerseits ggf. die Berechnung, desto sicherer aber andererseits die Schlüsselableitung, die für einen Angreifer zunehmend undurchschaubarer wird, je mehr gerätespezifische Abhängigkeiten vorhanden sind.

Es ist möglich, dass die gerätespezifische Systemidentifizierungsinformation ID in mehreren Teilen geschrieben wird. Die gerätespezifische Systemidentifizierungsinformation ID kann mehrere Teile umfassen, welche schrittweise ermittelt und gesetzt werden. Dabei kann mittels mehrerer oder aller der folgenden Schritte ein Teil der gerätespezifischen Systemidentifizierungsinformation ermittelt und gesetzt werden:

- Der First Stage Boot Loader kann eine Systeminformation ermitteln und setzen.

- Der Second Stage Boot Loader, z.B. U-Boot, kann eine Systeminformation ermitteln und setzen. Dies kann durch U-Boot selbst erfolgen oder durch einen Boot-Programmcode oder ein Bootscript, welches von U-Boot aufgerufen wird.

- Der Linux-Kernel selbst oder ein statisch gelinktes Kernel-Modul kann eine Systeminformation ermitteln und setzen.

- Ein nachgeladenes Linux-Kernel-Modul kann eine Systeminformation ermitteln und setzen.

- Der Initialisierungs-Programmcode von Initrd oder ein davon aufgerufener Programmcode oder ein Script kann eine Systeminformation ermitteln und setzen.

- Ein Startup-Script des gestarteten Linux-Systems nach dem Mounten der Dateisysteme kann eine Systeminformation setzen.

Bei diesem Setzen der gerätespezifischen Systemidentifizierungsinformation in mehreren Schritten wird jeweils die Information eines einzelnen Schrittes so gesetzt, dass sie bei der Ausführung nachfolgender Schritte nicht mehr änderbar ist.

Die ermittelte gerätespezifische Systemidentifizierungsinformation **ID** setzt sich in einer Variante aus mehreren Parametern **P1**, **P2**, **Pn**, zusammen und wird konkateniert, d.h. aneinandergehängt und in das Boot Time System ID-Register BTID geschrieben, d.h.

$$ID := P1 \| P2 \| Pn$$

Vorteilhafterweise berechnet der Programmcode C1 einen kryptographischen Hashwert mittels einer Hashfunktion **H** der ermittelten Parameter als gerätespezifische Systemidentifizierungsinformation ID, d.h.

$$ID := H(P1 \| P2 \| Pn)$$

Dabei wird beispielsweise die kryptographische Hashfunktion SHA256 oder Blake2 eingesetzt.

In einer weiteren Variante berechnet der Programmcode C1 einen kryptographischen Hashwert der ermittelten Parameter iterativ durch Verkettung der Hashfunktionen, d.h.

$$ID := H\big(Pn \| H\big(P2 \| H(P1)\big) \ldots \big)$$

Es kann ebenso eine Key Derivation Function wie HMAC-SHA256 als Hashfunktion verwendet werden.

Auf dem FPGA wird aus einem systemübergreifenden Schlüssel SK, welcher beispielsweise ebenfalls in einem verbauten EEPROM abgelegt ist, und unter Einbeziehung der gerätespezifischen Systemidentifizierungsinformation ID eine Schlüsselableitungsfunktion KDF durchgeführt. Das Ausführungsergebnis ist der gerätespezifische kryptographische Schlüssel.

Figur 2 zeigt die Situation des FPGA-basierten Systems on Chip aus Figur 1 während eines normalen Betriebs. Als Schlüsselableitungsfunktion ist eine Runtime Key Derivation Function RTKDF vorgesehen. Applikationen APP1 oder APP2, die auf dem Prozessor CPU ausgeführt werden, rufen eine Funktion der Runtime Key Derivation Function RTKDF auf, um abhängig von einem zur Laufzeit wählbaren Ableitungsparameter Runtime Derivation Parameter RTDP einen abgeleiteten Laufzeitschlüssel RTIDK zu erhalten. Dies ist der gerätespezifische kryptographische Schlüssel, welcher in diesem Beispiel zur Laufzeit gebildet wird. Dabei sind mehrere verschiedene Laufzeitschlüssel für verschiedene Zwecke bildbar, beispielsweise um eine Datei zu entschlüsseln oder um einen Schlüsselspeicher zu öffnen oder um ein verschlüsseltes Dateisystem zu mounten oder um Codebestandteile zu entschlüsseln.

In die Schlüsselableitung geht regulär auch die eindeutige gerätespezifische Systemidentifizierungsinformation ID aus dem Boot Time System Identifier-Register BTID ein. Dieser Wert ist in dem Register abgespeichert, welches während des Bootvorganges beschrieben wurde. Überdies geht regulär der systemübergreifende Schlüssel SK als Masterschlüssel ein.

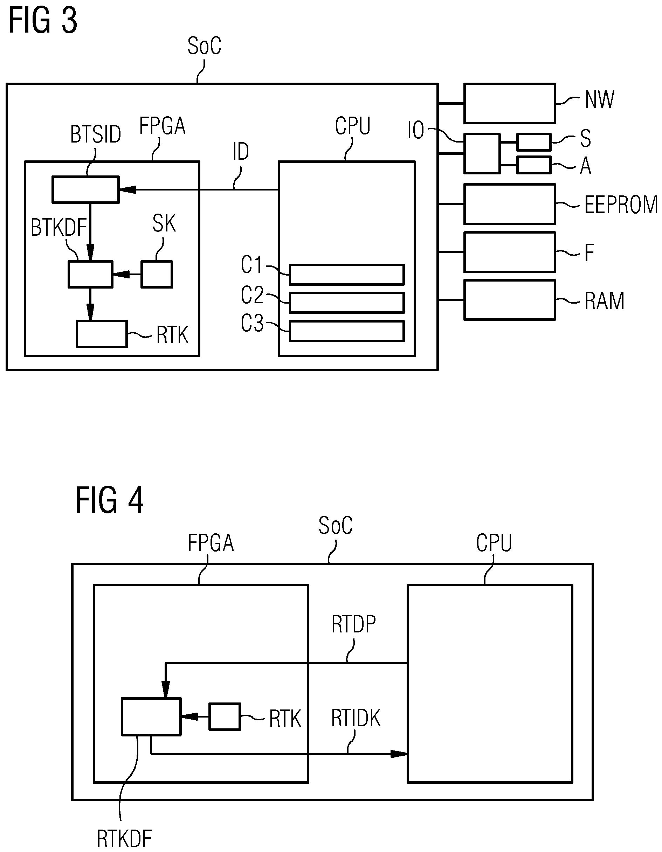

In Figur 3 ist eine Variante dargestellt, bei der eine Boot Time Key Derivation Function BTKDF auf der programmierbaren Logik FPGA vorgesehen ist, welche abhängig von einer als Boot time System-ID BTSID ausgestalteten gerätespezifischen Systemidentifizierungsinformation ID einen Runtime Key RTK aus einem Systemschlüssel SK ableitet.

In Figur 4 ist die Nutzung des Runtime Keys RTK mittels der Runtime Key Derivation Function RTKDF dargestellt, wobei ein wie anhand der Figur 3 beschrieben gebildeter Runtime Key RTK gemeinsam mit einem Runtime Ableitungsparameter RTDP in die Runtime Key Derivation Function RTKDF eingeht. Der so abgeleitete zur Laufzeit gebildete gerätespezifische kryptographische RTIDK wird auf Anfrage vom Prozessor CPU genutzt.

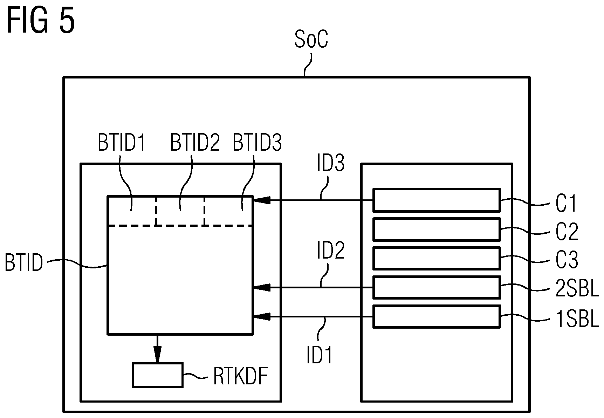

Figur 5 zeigt schematisch ein System on Chip SoC, bei dem die Boot Time System-ID oder die gerätespezifisch Systemidentifizierungsinformation mehrere Teile enthält, die jeweils separat gesetzt werden. Im dargestellten Beispiel besteht die gerätespezifische Systemidentifizierungsinformation aus drei Teilparametern ID1, ID2 und ID3, die in jeweilige Register BTID1, BTID2, BTID3 geschrieben werden. Die drei Teilparameter werden im dargestellten Beispiel vom First Stage Boot Loader 1SBL und vom Second Stage Boot Loader 2SBL und vom Programmcode des Initrd-Filesystems C1 gesetzt.

Der gesetzte Wert ergibt sich damit als zusammengesetzter, konkatenierter Wert der Werte ID1, ID2 und ID3. In einer Variante ist eine Schlüsselableitung mittels der Runtime Key Derivation Function RTKDF erst möglich, wenn alle drei Parameter gesetzt sind. In einer anderen Variante ist eine Schlüsselableitung auch schon während der Bootphase möglich, wobei die bereits gesetzten Teile in die Schlüsselableitung eingehen. Bei dieser Variante geht vorteilhafterweise ein weiterer Parameter in die Schlüsselableitung ein, der abhängig davon gebildet wird, welche Teile des Boot Time Systems ID-Registers bereits gesetzt oder noch nicht gesetzt sind.

Es ergeben sich insbesondere Vorteile für Szenarien, in denen ein verwendeter integrierter Schaltkreis keine interne eindeutige Seriennummer aufweist. Enthält das verwendete Hardwaremodul keine eindeutige Chip-Seriennummer, so fällt beispielsweise ein mittels eines FPGA-Bitstreams mit darin enthaltenem Masterschlüssel generierter Schlüssel auf unterschiedlichen integrierten Schaltkreisen identisch aus.

Mittels des in der vorliegenden Anmeldung beschriebenen Verfahrens und der beschriebenen Vorrichtung wird eine nur aufwendig manipulierbare Chip-Individualisierung erreicht. Diese kann einfach in Software realisiert werden. HardwareManipulationen an einem System werden erschwert, da beispielsweise das Austauschen einer Komponente dazu führt, dass die gerätespezifische Systemidentifizierungsinformation verändert wird. Somit werden unterschiedliche Schlüssel zur Laufzeit abgeleitet. Entschlüsselungen von Dateien des Originalsystems in einem manipulierten System werden so vorteilhaft verhindert.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum gesicherten Bereitstellen eines gerätespezifischen kryptographischen Schlüssels (IDK) aus einem systemübergreifenden Schlüssel (SK) für ein Gerät, mit den folgenden Schritten:

   - Bilden mehrerer gerätespezifischer Systemidentifizierungsinformationen (ID1, ID2) während zumindest zwei aufeinanderfolgender Startphasen, wobei die gerätespezifische Systemidentifizierungsinformationen (ID1, ID2) mehrere Teile umfassen, welche schrittweise ermittelt und gesetzt werden;
   - Versiegeln der gerätespezifischen Systemidentifizierungsinformationen (ID1, ID2) durch ein jeweils maximal einmal mögliches Schreiben der jeweiligen gerätespezifischen Systemidentifizierungsinformation (ID1, ID2) während der zumindest zwei Startphasen;
   - Ermitteln des systemübergreifenden Schlüssels (SK);
   - Ableiten des gerätespezifischen kryptographischen Schlüssels (IDK) aus dem systemübergreifenden Schlüssel (SK) unter Verwendung einer endgültigen gesamtgerätespezifischen Systemidentifizierungsinformation (ID);

   wobei mindestens zwei gerätespezifische Systemidentifizierungsinformationen (ID1, ID2) während der zumindest zwei Startphasen gebildet und versiegelt werden, wobei in den zumindest zwei Startphasen jeweils eine der Systemidentifizierungsinformationen (ID1, ID2) versiegelt wird, und die endgültige gesamt-gerätespezifische Systemidentifizierungsinformation (ID) aus den Systemidentifizierungsinformationen (ID1, ID2) als Parameter gebildet wird.

2. Verfahren nach Anspruch 1, wobei das Bilden der gerätespezifischen Systemidentifizierungsinformationen (ID1, ID2) unter Verwendung eines für das Gerät charakteristischen Parameters, wie insbesondere einer Seriennummer oder eines Typs eines Speicherbausteines oder eines Peripheriebausteines des Gerätes, oder unter Verwendung eines Identifizierers eines Prozessors oder eines Chips des Gerätes oder unter Verwendung einer MAC-Adresse eines Netzwerkadapters oder einer Seriennummer einer Harddisc des Gerätes, oder unter Verwendung einer physikalisch unklonbaren Funktion oder einer Versionsinformation oder eines Hash-Wertes von Firmware oder von Konfigurationsdaten durchgeführt werden.

3. Verfahren nach Anspruch 1 oder 2, wobei zum Bilden der gerätespezifischen Systemidentifizierungsinformationen (ID1, ID2) ein Initialisierungscode oder ein Programmcode eines Wurzel-Dateisystems (IFS) verwendet werden.

4. Verfahren nach einem der vorstehenden Ansprüche, wobei das Versiegeln durchgeführt wird

   - mittels eines einmal beschreibbaren flüchtigen Speichers, beispielsweise eines Registers, welches ein weiteres Schreiben verhindert, oder
   - mittels einer Konfiguration, bei der ein Speicher nach dem Versiegeln als nicht beschreibbar konfiguriert wird.

5. Verfahren nach einem der vorstehenden Ansprüche, wobei als systemübergreifender Schlüssel (SK) ein Secret Key oder Master Key ausgelesen wird, insbesondere aus einem Speicherbaustein oder einem Firmware-Image einer Prozessoreinheit oder aus einem Bitstream eines programmierbaren Hardwaremoduls.

6. Verfahren nach einem der vorstehenden Ansprüche, wobei für das Ableiten eine Schlüsselableitungsfunktion in Abhängigkeit von den gerätespezifischen Systemidentifizierungsinformationen (ID1, ID2) modifiziert wird oder für eine feste Schlüsselableitungsfunktion die gerätespezifische Systemidentifizierungsinformationen (ID1, ID2) als Ableitungsparameter eingehen.

7. Verfahren nach Anspruch 6, wobei die Schlüsselableitungsfunktion das Ableiten zur Laufzeit durchführt.

8. Computerprogrammprodukt mit einem Computerprogramm, das Mittel zur Durchführung des Verfahrens nach einem der Ansprüche 1 bis 7 aufweist, wenn das Computerprogramm auf einer programmgesteuerten Einrichtung zur Ausführung gebracht wird.

9. Vorrichtung zum gesicherten Bereitstellen eines gerätespezifischen kryptographischen Schlüssels (IDK) aus einem systemübergreifenden Schlüssel (SK) für ein Gerät, aufweisend:

   - eine erste Einheit zum Bilden mehrerer gerätespezifischer Systemidentifizierungsinformationen (ID1, ID2) während zumindest zwei aufeinanderfolgender Startphasen;
   - eine zweite Einheit zum Versiegeln der gerätespezifischen Systemidentifizierungsinformationen (ID1, ID2), wobei die gerätespezifische Systemidentifizierungsinformationen (ID1, ID2) während der zumindest zwei Startphasen jeweils maximal einmal schreibbar sind, wobei mindestens zwei gerätespezifische Systemidentifizierungsinformationen (ID1, ID2) während der zumindest zwei Startphasen gebildet und versiegelt werden, wobei in den zumindest zwei Startphasen jeweils eine der Systemidentifizierungsinformationen (ID1, ID2) versiegelt wird;

- eine dritte Einheit zum Ermitteln des systemübergreifenden Schlüssels (SK);
- eine vierte Einheit zum Ableiten des gerätespezifischen kryptographischen Schlüssels (IDK) aus dem systemübergreifenden Schlüssel unter Verwendung einer endgültigen gesamt-gerätespefizischen Systemidentifizierungsinformation (ID),

wobei die endgültige gesamt-gerätespezifische Systemidentifizierungsinformation (ID) aus den Systemidentifizierungsinformationen (ID1, ID2) als Parameter gebildet wird

## Claims

1. Method for the secure provision of a device-specific cryptographic key (IDK) from a system-wide key (SK) for a device, comprising the following steps:

   - forming a plurality of items of device-specific system identification information (ID1, ID2) during at least two subsequent starting phases, wherein the items of device-specific system identification information (ID1, ID2) comprise a plurality of parts, which are identified and set in steps;
   - sealing the items of device-specific system identification information (ID1, ID2) by way of a respective, at most once-possible, writing of the respective item of device-specific system identification information (ID1, ID2) during the at least two starting phases;
   - identifying the system-wide key (SK);
   - deriving the device-specific cryptographic key (IDK) from the system-wide key (SK) using a final item of overall-device-specific system identification information (ID);

   wherein at least two items of device-specific system identification information (ID1, ID2) are formed and sealed during the at least two starting phases, wherein, in the at least two starting phases, in each case one of the items of system identification information (ID1, ID2) is sealed, and the final item of overall-device-specific system identification information (ID) is formed as a parameter from the items of system identification information (ID1, ID2).

2. Method according to Claim 1, wherein the formation of the items of device-specific system identification information (ID1, ID2) is carried out using a parameter that is characteristic of the device, such as, in particular, a serial number or a type of memory module or peripheral module of the device, or using an identifier of a processor or a chip of the device or using a MAC address of a network adapter or a serial number of a hard disk of the device, or using a physically unclonable function or an item of version information or a hash value of firmware or configuration data.

3. Method according to Claim 1 or 2, wherein an initialization code or a program code of a root file system (IFS) is used to form the items of device-specific system identification information (ID1, ID2).

4. Method according to one of the preceding claims, wherein the sealing is carried out

   - by means of a write-once volatile memory, for example a register, which prevents further writing, or
   - by means of a configuration in which a memory is configured as non-writable after the sealing.

5. Method according to one of the preceding claims, wherein a secret key or master key is read out as system-wide key (SK), in particular from a memory module or a firmware image of a processor unit or from a bitstream of a programmable hardware module.

6. Method according to one of the preceding claims, wherein, for the derivation, a key derivation function is modified depending on the items of device-specific system identification information (ID1, ID2) or, for a fixed key derivation function, the items of device-specific system identification information (ID1, ID2) are used as derivation parameters.

7. Method according to Claim 6, wherein the key derivation function carries out the derivation with regard to the runtime.

8. Computer program product comprising a computer program, which has means for carrying out the method according to one of Claims 1 to 7 when the computer program is executed on a piece of program-controlled equipment.

9. Apparatus for the secure provision of a device-specific cryptographic key (IDK) from a system-wide key (SK) for a device, having:

   - a first unit for forming a plurality of items of device-specific system identification information (ID1, ID2) during at least two subsequent starting phases;
   - a second unit for sealing the items of device-specific system identification information (ID1, ID2), wherein the items of device-specific system identification information (ID1, ID2) can respectively be written to at most once during the at least two starting phases, wherein at least two items of device-specific system identification information (ID1, ID2) are formed and sealed during the at least two starting phases, wherein, in the at least two starting phases, in each case one of the items of system identification information (ID1, ID2) is sealed;
- a third unit for identifying the system-wide key (SK);
- a fourth unit for deriving the device-specific cryptographic key (IDK) from the system-wide key (SK) using a final item of overall-device-specific system identification information (ID),

wherein the final item of overall-device-specific system identification information (ID) is formed as a parameter from the items of system identification information (ID1, ID2).

## Revendications

1. Procédé de fourniture sécurisée d'une clé cryptographique spécifique d'un appareil (IDK) à partir d'une clé intersystème (SK) pour un appareil, comprenant les étapes suivantes :

   - formation de plusieurs informations d'identification de système (ID1, ID2) spécifiques d'un appareil pendant au moins deux phases de démarrage consécutives, dans lequel les informations d'identification de système (ID1, ID2) spécifiques d'un appareil comprennent plusieurs parties qui sont déterminées et définies par étapes ;
   - cachetage des informations d'identification de système (ID1, ID2) spécifiques d'un appareil par une écriture respectivement possible au maximum une fois des informations d'identification de système (ID1, ID2) respectives spécifiques d'un appareil pendant les au moins deux phases de démarrage ;
   - détermination de la clé intersystème (SK) ;
   - dérivation de la clé cryptographique spécifique d'un appareil (IDK) à partir de la clé intersystème (SK) en employant une information d'identification (ID) de système spécifique de l'appareil ;

   dans lequel au moins deux informations d'identification de système (ID1, ID2) spécifiques d'un appareil sont formées et cachetées pendant les au moins deux phases de démarrage, dans lequel dans les au moins deux phases de démarrage, respectivement une des informations d'identification de système (ID1, ID2) est cachetée et l'information d'identification de système (ID) finale spécifique de tout l'appareil est formée en tant que paramètre à partir des informations d'identification de système (ID1, ID2).

2. Procédé selon la revendication 1, dans lequel la formation des informations d'identification de système (ID1, ID2) spécifiques d'un appareil est effectuée en employant un paramètre caractéristique de l'appareil, comme en particulier un numéro de série ou un type d'un composant de mémoire ou d'un composant périphérique de l'appareil, ou en employant un identifiant d'un processeur ou une puce de l'appareil ou en employant une adresse MAC d'un adaptateur réseau ou un numéro de série d'un disque dur de l'appareil ou en employant une fonction non clonable physiquement ou une information de version ou une valeur de hachage de firmware ou des données de configuration.

3. Procédé selon la revendication 1 ou 2, dans lequel pour former les informations d'identification de système (ID1, ID2) spécifiques d'un appareil, un code d'initialisation ou un code de programme d'un système de fichiers racine (IFS) est/sont employé(s).

4. Procédé selon l'une des revendications précédentes, dans lequel le cachetage est exécuté

   - au moyen d'une mémoire volatile sur laquelle il ne peut être écrit qu'une fois, par exemple un répertoire qui empêche une écriture supplémentaire, ou
   - au moyen d'une configuration dans laquelle une mémoire est configurée comme étant sans écriture possible dessus après le cachetage.

5. Procédé selon l'une des revendications précédentes, dans lequel une clé secrète ou une clé passe-partout est lue en tant que clé intersystème (SK), en particulier à partir d'un composant de mémoire ou d'une image de firmware d'une unité de processeur ou d'un train de bits d'un module de hardware programmable.

6. Procédé selon l'une des revendications précédentes, dans lequel pour la dérivation, une fonction de dérivation de clé en fonction des informations d'identification de système (ID1, ID2) spécifiques d'un appareil est modifiée ou pour une fonction de dérivation de clé fixe, les informations d'identification de système (ID1, ID2) spécifiques d'un appareil entrent en tant que paramètre de dérivation.

7. Procédé selon la revendication 6, dans lequel la fonction de dérivation de clé exécute la dérivation par rapport à la durée d'action.

8. Produit de programme informatique comprenant un programme informatique, qui présente des moyens pour exécuter le procédé selon l'une des revendications 1 à 7 lorsque le programme informatique est placé sur un dispositif commandé par un programme pour l'exécution.

9. Dispositif de fourniture sécurisée d'une clé cryptographique spécifique d'un appareil (IDK) à partir d'une clé intersystème (SK) pour un appareil, présentant :

   - une première unité pour former plusieurs informations d'identification de système (ID1, ID2) spécifiques d'un appareil pendant au moins deux phases de démarrage consécutives ;
   - une deuxième unité pour cacheter les informations d'identification de système (ID1, ID2) spécifiques d'un appareil, dans lequel les informations d'identification de système (ID1, ID2) spécifiques d'un appareil peuvent être écrites respectivement au maximum une fois pendant les au moins deux phases de démarrage, dans lequel au moins deux informations d'identification de système (ID1, ID2) spécifiques d'un appareil sont formées et cachetées pendant les au moins deux phases de démarrage, dans lequel dans les au moins deux phases de démarrage, respectivement une des informations d'identification de système (ID1, ID2) est cachetée ;
   - une troisième unité pour déterminer la clé intersystème (SK) ;
   - une quatrième clé pour dériver la clé cryptographique spécifique d'un appareil (IDK) à partir de la clé intersystème en employant une information d'identification (ID) de système spécifique de tout l'appareil finale, dans lequel l'information d'identification (ID) de système spécifique de tout l'appareil finale est formée en tant que paramètre à partir des informations d'identification de système (ID1, ID2) .

FIG 1

SoC

BTID   FPGA                    CPU        IO        NW

                      ID                             S
                                                     A

KDF          SK                C1                   EEPROM
                               C2                   F
                               C3                   RAM

FIG 2

FPGA      SoC              CPU

          ID, BTID    RTDP    App1  App2

          SK          RTIDK

RTKDF

FIG 3

SoC

FPGA

BTSID

CPU

IO

NW

S

A

BTKDF

SK

EEPROM

C1

F

C2

RTK

C3

RAM

ID

FIG 4

FPGA

SoC

CPU

RTDP

RTK

RTIDK

RTKDF

FIG 5

**IN DER BESCHREIBUNG AUFGEFÜHRTE DOKUMENTE**

**In der Beschreibung aufgeführte Patentdokumente**

- US 2015180654 A1